# EUROPÄISCHE PATENTSCHRIFT

(11) **EP 2 547 574 B1**
(45) Veröffentlichungstag und Bekanntmachung des Hinweises auf die Patenterteilung: **09.03.2016**
(21) Anmeldenummer: 11713176.3
(22) Anmeldetag: 10.03.2011
(51) Int. Cl.: B62D 25/04, B62D 25/08, B62D 25/14

(54) **VORDERWAGEN EINES FAHRZEUGS**
FRONT END OF A VEHICLE
ÉLÉMENT AVANT D'UN VÉHICULE

(30) Priorität: 13.03.2010 DE 102010011320
(43) Veröffentlichungstag der Anmeldung: 23.01.2013
(73) Patentinhaber: Volkswagen Aktiengesellschaft, 38440 Wolfsburg (DE)
(72) Erfinder: BÖSCHE, Thorben, 38446 Wolfsburg (DE); LOHMANN, Bernard, deceased (DE)
(86) Internationale Anmeldenummer: PCT/EP2011/001186
(87) Internationale Veröffentlichungsnummer: WO 2011/113550

(56) Entgegenhaltungen:
- EP-A1- 1 564 050
- EP-A1- 2 020 364

## Beschreibung

Die Erfindung betrifft einen Vorderwagen eines Fahrzeugs, insbesondere Kraftfahrzeugs, mit zwei in Fahrzeugquerrichtung gesehen gegenüberliegend angeordneten unteren Längsträgern, auf denen sich je eine Federbeinaufnahme abstützt, und mit einem Modulquerträger, der sich seinerseits in Fahrzeugquerrichtung zwischen zwei A-Säulen erstreckt und mit denselben fest verbunden ist.

Zu den sicherlich wichtigsten Strukturteilen einer Karosserie eines Fahrzeugs zählen im Crashfall, insbesondere während eines Frontalcrashes, die vorderen unteren Längsträger des Vorderwagens, welche während besagten Frontalcrashes einen gewissen Energieabsorptionsanteil liefern müssen und die Restkräfte in die nachgeordnete Karosseriestruktur weiterleiten. Die besagten vorderen unteren Längsträger bilden eine sogenannte untere Frontalcrashebene aus. Kräfte aus insbesondere einem Frontalcrash werden vorteilhaft unter der Fahrgastzelle hindurch in nachgeordnete Karosseriestrukturen weitergeleitet und absorbiert. Eine sogenannte obere Frontalcrashebene, die sich etwa in Höhe der Gürtellinie des Fahrzeugs befindet, wird durch obere Längsträger des Vorderwagens mit bestimmt, welche ihrerseits nach hinten an eine A-Säule der Karosserie anstoßen. Im Falle eines Frontalcrashes, bei denen die Bereiche der Knautschzone im Vorderwagen nicht zur Energieabsorption ausreichen, werden damit auch Karosseriestrukturen, die im Bereich besagter Gürtellinie angeordnet sind, zur definierten Energieabsorption mit herangezogen, indem die Kräfte über die A-Säule, eine nachgeordnete Crashrohr-Struktur der vorderen Seitentür, die B-Säule und ggf. weiter bis in die C-Säule abgeleitet werden, um eine zu starke Verformung der Fahrgastzelle zu vermeiden. Auf den Längsträgern ist des Weiteren je eine zur A-Säule beabstandet angeordnete Federbeinaufnahme abgestützt, welche jedoch während eines Frontalcrashes in die Fahrgastzelle eindrehen und den Insassenschutz erheblich mindern kann.

Um diesem Umstand zu begegnen, sind eine Vielzahl von Lösungen bekannt. So ist aus der DE 41 38 395 A1 eine Tragstruktur einer Karosserie eines Personenkraftwagens mit vorderen Federbeinaufnahmen bekannt, welche jeweils mittels eines Hohlprofilträgers, hier als Federbeinträger bezeichnet, mit einem mittig einer A-Säule angeordneten Knotenelement verbunden sind. Besagter Federbeinträger weist eine Biegung auf, wodurch bei einem Frontalaufprall des Fahrzeugs durch Verkleinern des Biegeradius des Federbeinträgers derselbe ausknickt. Durch diese Maßnahme soll die Krafteinwirkung auf den Türpfosten verringert und einer möglichen Verspannung der Fahrzeugtür entgegengewirkt werden. Die DE 196 21 673 A1 beschreibt des Weiteren einen Vorderbau eines Kraftfahrzeugs, dessen vordere Federbeinaufnahmen jeweils über zwei divergierende Träger mit der A-Säule und einem Querträger einer Stirnwand, vorliegend einem unteren Fensterholm eines Frontfensters, verbunden sind. Der zur Stirnwand verlaufende Träger ist so ausgebildet und angeordnet, dass er zusätzlich zur Aufnahme von Betriebskräften im Falle eines Frontalaufpralles ein Eindrehen oder Abknicken des zur A-Säule verlaufenden Trägers verhindert. Aus der DE 196 32 712 C2 ist überdies ein Karosserievorderbau für ein Kraftfahrzeug mit Federbeinaufnahmen bekannt, bei dem vordere Längsträger jeweils zur Fahrgastzelle hin in einen unterer Arm und einen oberen Arm aufgezweigt sind. Der untere Arm ist zum einen mit einem Türschweller und zum anderen mit einer Federbeinaufnahme verbunden, wogegen der obere Arm zum einen in Höhe der Unterkante einer Frontscheibe mit einer A-Säule des Kraftfahrzeugs und zum anderen mit der Federbeinaufnahme verbunden ist. Die DE 201 03 379 U1 offenbart ferner einen Karosserievorbau eines Kraftfahrzeugs mit einer sogenannten Druckstrebe, die ihrerseits zwischen einem Längsträger und einer Stirnwand der Fahrgastzelle angeordnet ist und während eines Frontalcrashes den Längsträger sowie den Federbeindom einer Federbeinaufnahme gegen den oberen Bereich der Stirnwand abstützt. Da besagte Stirnwand herkömmlich relativ weich ausgebildet ist, verfügt die Druckstrebe über einen die Stirnwand aussteifenden Druckaufnahmebereich, der einen oberen Bereich der Stirnwand wenigstens teilweise flächig bedeckt. Schließlich ist aus der DE 10 2006 055 730 A1 eine Federbeinaufnahme mit einem Federbeindom bekannt, der seinerseits vermittels eines Trägers mit der A-Säule und zusätzlich vermittels eines weiteren Trägers mit einer Stirnwand der Fahrgastzelle, mit einem Windlauf und/oder mit einem Querträger verbunden ist.

Aus der EP 2 020 364 A1 ist ein Vorderwagen eines Fahrzeuges bekannt, der zwei untere Längsträger aufweist, auf denen sich jeweils eine Federbeinaufnahme abstützt. Zwischen den beiden A-Säulen erstreckt sich ein Modulquerträger. Zudem ist eine Eckversteifung vorgesehen, die jeweils an der A-Säule und an einer, dem Modulquerträger vorgelagerten Querbaugruppe angebunden ist. Aus der EP 1 564 050 A1 ist eine Gürtellinienteilkonstruktion für ein Fahrzeug bekannt.

Aufgabe der Erfindung ist es, eine zum Stand der Technik alternative Ausgestaltung eines Vorderwagens eines Fahrzeugs, insbesondere Kraftfahrzeugs, vorzuschlagen, welche zum einen die Ableitung der im Frontalcrash auftretenden Kräfte in den Lastpfad der A-Säule gewährleistet und zum anderen ein Eindrehen des Federbeindoms einer Federbeinaufnahme in die Fahrgastzelle des Fahrzeugs verhindert, zumindest jedoch wirkungsvoll mindert.

Diese Aufgabe wird durch einen Vorderwagen eines Fahrzeugs gemäß Anspruch 1 und ein Fahrzeug gemäß Anspruch 10 gelöst.

Ausgehend von einem Vorderwagen eines Fahrzeugs, insbesondere Kraftfahrzeugs, mit zwei in Fahrzeugquerrichtung (Y-Richtung) gesehen gegenüberliegend angeordneten unteren Längsträgern, auf denen sich je eine Federbeinaufnahme abstützt, und mit einem Modulquerträger, der sich seinerseits in Fahrzeugquerrichtung (Y-Richtung) zwischen zwei A-Säulen erstreckt und mit denselben fest verbunden ist, wird die gestellte Aufgabe dadurch gelöst, dass jeder A-Säule eine Eckverstärkung zugeordnet ist, die im Bereich der Anbindung des Modulquerträgers an die A-Säule zum einen mit der A-Säule und zum anderen mit dem Modulquerträger fest verbunden sowie mittels zumindest einer integrierten Crashstrebe an einer Federbeinaufnahme abgestützt ist.

Durch besagte Eckverstärkung ist neben der bezeichnenderweise Verstärkung der A-Säule eine wirkungsvolle Kraftbrücke der oberen Frontalcrashebene im Übergang von der Federbeinaufnahme zu A-Säule geschaffen. Hierdurch wird somit zum einen ein Eindrehen der Federbeinaufnahme respektive dessen Federbeindoms im Crashfall verhindert und zum anderen eine wesentliche Erhöhung der Fahrzeugsteifigkeit im Eckbereich A-Säule und Modulquerträger erzielt. Gleichzeitig ist durch diese Maßnahme eine wesentliche Verstärkung eines benachbarten Anschlussbereiches zwischen A-Säule und Stirnwand sowie Wasserkasten derselben erzielt, welches vorteilhafterweise einer etwaigen Intrusion von Bauteilen und/oder Aggregaten des Vorderwagens in die Fahrgastzelle im Falle eines Frontalcrashes ebenfalls entgegensteht.

Die Unteransprüche beschreiben bevorzugte Weiterbildungen oder Ausgestaltungen der Erfindung.

Danach kann die Eckverstärkung als ein zumindest abschnittsweise im Querschnitt geschlossenes Hohlprofil nach Art einer Crashbox ausgebildet sein, welche sich in Fahrzeugquerrichtung (Y-Richtung) gesehen entlang des Modulquerträgers erstreckt und mit einer Stirnseite zumindest an der A-Säule und mit einer Seitenfläche zumindest am Modulquerträger festgelegt ist. Durch eine derartige Gestaltung der Eckverstärkung werden auftrete Kräfte während eines Frontalcrashes in die besagte Crashbox eingeleitet und optimal in die Karosseriebauteile der oberen Frontalcrashebene, nämlich direkt in die A-Säule und nachgeordnete Karosseriebauteile der oberen Frontalcrashebene abgeleitet. In Versuchen hat sich eine derartige Eckverstärkung auch im Falle eines Seitencrashes vorteilhaft bewährt, da die dann auftretenden Kräfte vorteilhaft um die Fahrgastzelle herumgeleitet werden konnten. Vorteilhaft kann die Eckverstärkung stoffschlüssig und/oder mittels mechanischer Befestigungselemente an der A-Säule und dem Modulquerträger festgelegt sein. Gemäß einer bevorzugten Ausführungsform kann dabei die Eckverstärkung stoffschlüssig, vorzugsweise durch Schweißung, mit der A-Säule und vermittels mechanischer Befestigungselemente mit dem Modulquerträger fest verbunden sein. Was die Eckverstärkung für sich anbelangt, kann dieselbe in Abhängigkeit vom gewählten Montageablauf zur Erstellung der Rohbaukarosserie und den voraussichtlich auftretenden Kräften im Crashfall ein- oder mehrteilig aus Metallblech und/oder aus Metallguss gebildet sein. Eine besonders praxisnahe Ausbildung einer mehrteiligen Eckverstärkung kann zumindest ein erstes Eckverstärkungsteil, über welches im Wesentlichen die feste Verbindung der Eckverstärkung an der A-Säule und am Modulquerträger bewirkt ist, ein zweites besagte Crashstrebe darstellendes Eckverstärkungsteil und ein drittes Eckverstärkungsteil, welches seinerseits im Wesentlichen erstes und zweites Eckverstärkungsteil zueinander aussteift, umfassen. Eine mehrteilig ausgebildete Eckverstärkung kann dabei vor Einbau derselben in die Rohbaukarosserie durch Fügen der einzelnen Eckverstärkungsteile zu einer Baugruppe komplettiert werden. Demgegenüber kann es auch angezeigt sein, die einzelnen Eckverstärkungsteile erst während des Einbaus der Eckverstärkung in die Rohbaukarosserie zu derselben zu komplettieren. In diesem Fall bietet es sich vorteilhafterweise an, die Eckverstärkungsteile derart auszubilden, dass während des Einbaus derselben in die Rohbaukarosserie ein Toleranzausgleich durch Relativverschiebung der Eckverstärkungsteile zueinander in Fahrzeuglängs-, Fahrzeughoch- und/oder Fahrzeugquerrichtung (X-, Z-, Y-Richtung) gestattet ist. Weiter vorteilhaft kann vorgesehen sein, die Eckverstärkung weitestgehend in Höhe einer in der an die A-Säule sich anschließenden vorderen Seitentür angeordneten Crashrohr-Struktur zur Aufnahme von Kräften in Fahrzeuglängsrichtung an der A-Säule festzulegen, wodurch Kräfte infolge eines Frontalcrashes innerhalb der oberen Frontalcrashebene auf direktem Weg von der A-Säule in die hinteren Karosseriestruktur abgeleitet werden können. Ferner ist durch diese Maßnahme eine Verspannung der Seitentür vorteilhaft vermieden, so dass ein Öffnen derselben nach besagtem Frontalcrash gestattet ist.

Die Erfindung umfasst auch ein Fahrzeug, insbesondere Kraftfahrzeug, mit einem Vorderwagen der oben beschriebenen Art.

Die Erfindung wird nachstehend anhand eines in den Zeichnungen schematisch dargestellten Ausführungsbeispieles näher erläutert. Es zeigen:
- Fig. 1: eine perspektivische Ansicht des erfindungsgemäß ausgebildeten Vorderwagens eines Fahrzeugs, insbesondere Kraftfahrzeugs, mit einer sich anschließenden Bodengruppe der Fahrgastzelle der Rohbaukarosserie des Fahrzeugs,
- Fig. 2: eine perspektivische Detailansicht des Vorderwagens nach Fig. 1 im Bereich einer vorderen linken Federbeinaufnahme mit einer erfindungswesentlichen Eckverstärkung gemäß einer ersten möglichen Ausgestaltungsform (Ansicht von Fahrzeug-innen),
- Fig. 3: eine perspektivische Detailansicht des Vorderwagens nach Fig. 1 im Bereich der vorderen linken Federbeinaufnahme mit der erfindungswesentlichen Eckverstärkung gemäß einer weiteren möglichen Ausgestaltungsform (Ansicht von Fahrzeug-innen),
- Fig. 4: eine perspektivische Einzelteildarstellung der besagten Eckverstärkung nach Fig. 3,
- Fig. 5: die Ansicht "A" nach Fig. 4, und
- Fig. 6: die Ansicht "B" nach Fig. 4.

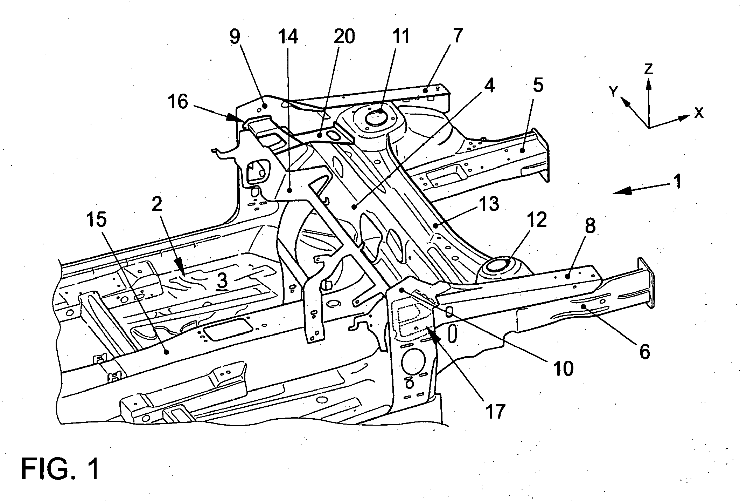

Fig. 1 zeigt zunächst den Vorderwagen 1 der Rohbaukarosserie eines Fahrzeugs, vorliegend eines Kraftfahrzeugs, mit einer sich an denselben anschließenden Bodengruppe 2 des Fahrgastzellenbereiches 3 des Fahrzeugs. Der Vorderwagen 1 und der Fahrgastzellenbereich 3 sind mittels einer Stirnwand 4 räumlich voneinander getrennt.

Besagter Vorderwagen 1 weist zwei in Fahrzeugquerrichtung (Y-Richtung) gesehen gegenüberliegend angeordnete untere Längsträger 5, 6 auf, die sich ihrerseits von vorn nach hinten unter die Bodengruppe 2 erstrecken. Wie bereits einleitend erläutert, müssen die vorderen unteren Längsträger 5, 6 des Vorderwagens 1 während eines Frontalcrashes einen gewissen Energieabsorptionsanteil liefern. Etwaige Restkräfte werden unter der Fahrgastzelle hindurch in die nachgeordnete Karosseriestruktur weitergeleitet und absorbiert. Die vorderen unteren Längsträger 5, 6 bilden demnach eine sogenannte untere Frontalcrashebene bzw. einen unteren Lastpfad "F1" aus.

Eine sogenannte obere Frontalcrashebene bzw. ein oberer Lastpfad "F2", die/der sich etwa in Höhe der Gürtellinie des Fahrzeugs befindet, wird durch obere Längsträger 7, 8 des Vorderwagens 1 mit bestimmt, welche ihrerseits jeweils nach hinten an eine A-Säule 9, 10 der Karosserie anstoßen. Im Falle eines Frontalcrashes, bei denen die Bereiche der Knautschzone im Vorderwagen 1 nicht zur Energieabsorption ausreichen, werden damit auch Karosseriestrukturen, die im Bereich besagter Gürtellinie angeordnet sind, zur definierten Energieabsorption mit herangezogen, indem die Kräfte über die A-Säule 9, 10, eine an sich bekannte nachgeordnete Crashrohr-Struktur einer an sich bekannten und demgemäß nicht näher dargestellten vorderen Seitentür, eine B-Säule und ggf. weiter bis in eine C-Säule abgeleitet werden, um eine zu starke Verformung der Fahrgastzelle zu vermeiden.

Des Weiteren weist der Vorderwagen 1 zwei an sich bekannte und demgemäß hier im Detail nicht näher erläuterte Federbeinäufnahmen 11, 12 auf, die sich ihrerseits auf den vorderen unteren Längsträgern 5, 6 abstützen. Ferner ist zwischen den besagten Federbeinaufnahmen 11, 12 ein Querträger 13 in Form eines an sich bekannten Wasserkastens angeordnet, der zum einen beidenends mit den Federbeinaufnahmen 11, 12 und in Fahrzeugquerrichtung (Y-Richtung) gesehen über sein Längserstreckung mit der oben bereits erwähnten Stirnwand 4 verbunden ist.

Ebenso ist in Fig. 1 ein an sich bekannter, sich überwiegend in Fahrzeugquerrichtung (Y-Richtung) erstreckender Modulquerträger 14 zur Abstützung einer nicht näher dargestellten Instrumententafel gezeigt. Der Modulqüerträger 14 ist im Wesentlichen beidenends an den A-Säulen 9, 10 und nach unten an einer Mitteltunnelstruktur 15 befestigt, vorzugsweise verschraubt.

Wie der Fig. 1 weiter zu entnehmen ist, ist vorliegend jeder A-Säule 9, 10 eine sogenannte Eckverstärkung 16, 17 zugeordnet. Die Eckverstärkungen 16, 17 sind jeweils im Bereich der Anbindung des Modulquerträgers 14 an die jeweilige A-Säule 9, 10 zum einen mit der A-Säüle 9, 10 und zum anderen mit dem Modulquerträger 14 fest verbunden. Hierfür bieten sich stoffschlüssige Fügemaßnahmen, wie Schweißen oder Kleben und oder kraftschlüssige Fügemaßnahmen mittels Schrauben, Niete und dgl. mehr an.

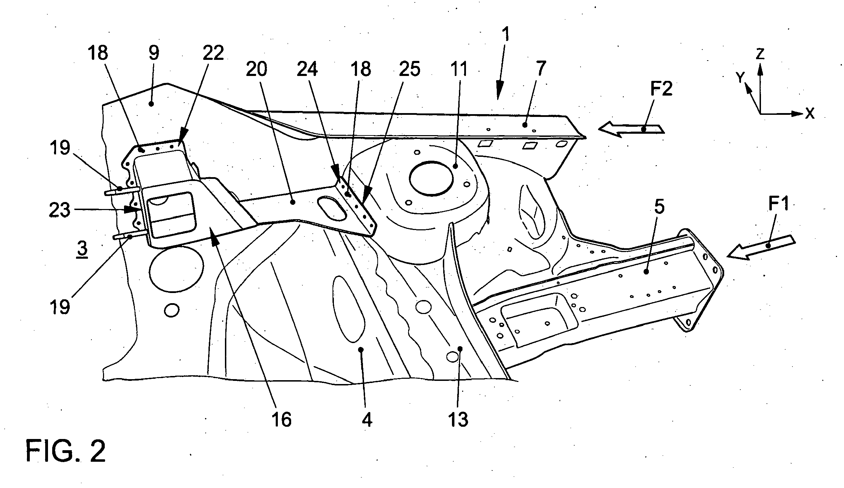

Bevorzugt ist die Eckverstärkung 16, 17 durch Schweißung, insbesondere Punktschweißung 18, mit der A-Säule 9, 10 und mittels mechanischer Befestigungselemente 19 mit dem Modulquerträger 14 fest verbunden (vgl. insbes. Fig. 2).

Die Eckverstärkungen 16, 17 verfügen ferner jeweils über eine integrierte Crashstrebe 20, die sich ihrerseits an der benachbarten Federbeinaufnahme 11, 12 abstützt, respektive mit derselben fest verbunden ist.

Die Eckverstärkung 16, 17 samt integrierter Crashstrebe 20 kann ein- oder mehrteilig ausgebildet sein. Hierfür bietet sich sowohl Metallblech als auch Metallguss an.

Die Fig. 1 und 2 zeigen insoweit eine einteilig ausgebildete Eckverstärkung 16, 17 samt integrierter Crashstrebe 20. Die Eckverstärkung 16, 17 für sich gesehen ist als ein zumindest abschnittsweise im Querschnitt geschlossenes Hohlprofil nach Art einer Crashbox ausgebildet, welche sich in Fahrzeugquerrichtung (Y-Richtung) gesehen entlang des Modulquerträgers 14 erstreckt. Die Eckverstärkung 16, 17 respektive Crashbox ist, wie bereits oben angedeutet, mit einer Stirnseite 21, die ihrerseits abgestellte Anschlussflansche, vorzugsweise Schweißflansche 22 aufweist, an der A-Säule 9, 10 mittels Punktschweißung 18 und mit einer zum Modulquerträger 14 weisenden Seitenfläche 23 mittels mechanischer Befestigungselemente 19 am Modulquerträger 14 befestigt.

Das freie Ende der in die Eckverstärkung 16, 17 integrierten Crashstrebe 20 ist derart ausgebildet und mit einem abgestellten Anschlussflansch, vorzugsweise Schweißflansch 24 versehen, dass eine möglichst große Anschlussfläche 25 der benachbarten Federbeinaufnahme 11, 12 zur Abstützung bereitsteht. Vorliegend erstreckt sich besagter Anschlussflansch respektive Schweißflansch 24 der Crashstrebe 20 weitestmöglich in Fahrzeugquerrichtung (Y-Richtung), wodurch eine bestmögliche Abstützung der Federbeinaufnahme 11, 12 gegen Eindrehen derselben im Crashfall, insbesondere während eines Frontalcrashes, gewährleistet ist.

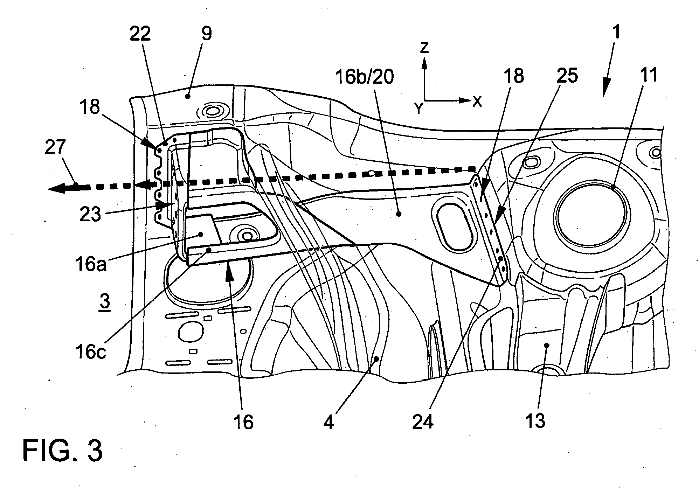

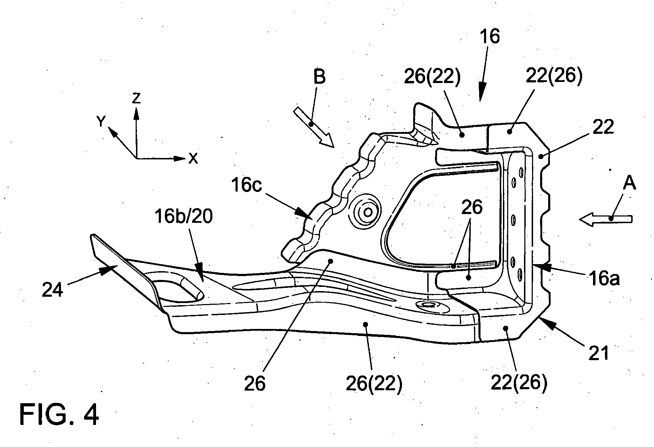

Die Fig. 3 bis 6 betreffen demgegenüber eine mehrteilig ausgebildete Eckverstärkung 16, 17 mit integrierter Crashstrebe 20, vorliegend der Einfachheit halber im Detail lediglich die linke Eckverstärkung 16 gezeigt. Die nicht näher dargestellte rechte Eckverstärkung 17 ist weitestgehend gleichartig zur linken Eckverstärkung 16, jedoch seitenverkehrt zu derselben ausgebildet. Diese Mehrteiligkeit hat den Vorteil der einfacheren und kostengünstiger Herstellbarkeit und wie nachfolgend noch näher zu erläutern ist, den Vorteil der komfortableren Montage, indem ein etwaige erforderlicher Toleranzausgleich einfach und kostengünstig durchführbar ist.

So weist beispielgebend die mehrteilig ausgebildete Eckverstärkung 16 vorliegend ein erstes Eckverstärkungsteil 16a auf, über welches im Wesentlichen die feste Verbindung der Eckverstärkung 16 an der A-Säule 9 und am Modulquerträger 14 bewirkt ist. Die hierzu geeigneten und bevorzugten Fügeverfahren sind bereits vorstehend zur einteiligen Eckverstärkung 16, 17 beschrieben worden. Des Weiteren ist ein zweites, besagte Crashstrebe 20 darstellendes Eckverstärkungsteil 16b vorgesehen. Schließlich ist ein drittes Eckverstärkungsteil 16c vorgesehen, welches seinerseits im Wesentlichen erstes und zweites Eckverstärkungsteil 16a, 16b zueinander aussteift.

Die Eckverstärkungsteile 16a-c sind vorzugsweise überwiegend über abgestellte Schweißflansche 26 untereinander fest verbunden bzw. verbindbar. Insoweit kann es angezeigt sein, die Eckverstärkung 16 durch Komplettierung der Eckverstärkungsteile 16a-c und Fügen derselben untereinander zu einer Baugruppe respektive Schweißgruppe vor dem eigentlichen Einbau der Eckverstärkung 16 in die Rohbaukarosserie zu erstellen.

Demgegenüber wird es auch als vorteilhaft erachtet, wenn die einzelnen Eckverstärkungsteile 16a-c unmittelbar vor Ort, d. h., in der Rohbaukarosserie zur besagten Eckverstärkung 16 komplettiert und untereinander und mit den benachbarten Bauteilen, wie A-Säule 9, Federbeinaufnahme 11 und Modulquerträger 14 verbunden werden.

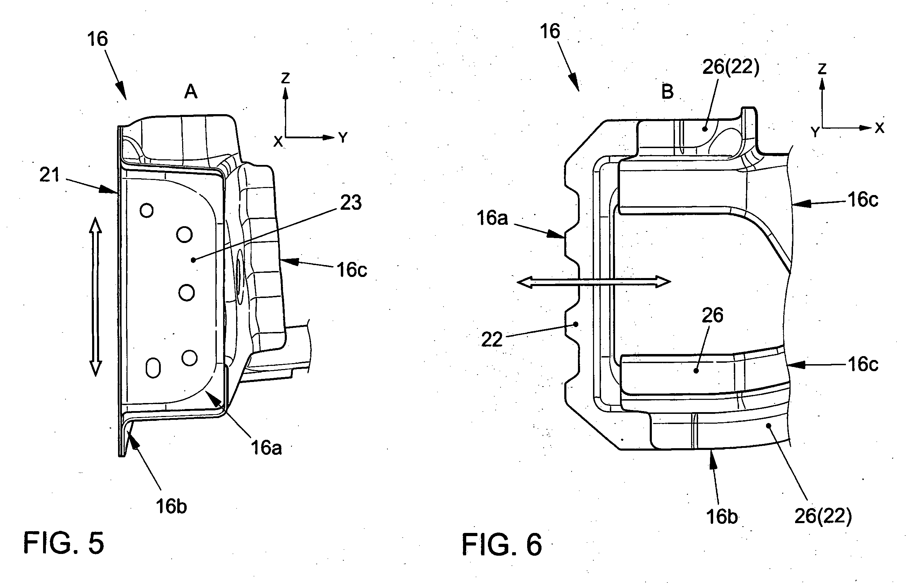

Durch diese Maßnahme ist es, wie in den Fig. 5 und 6 schematisch dargestellt, gestattet, durch Relativverschiebung der Eckverstärkurigsteile 16a-c zueinander und nachfolgendes Fügen einen etwaige erforderlichen Toleranzausgleich in Fahrzeuglängs-, Fahrzeughoch- und/oder Fahrzeugquerrichtung (X-, Z-, Y-Richtung), vorliegend in Fahrzeuglängs- und in Fahrzeughochrichtung (X-, Z-Richtung) vorzunehmen.

Zweckmäßigerweise sind die Eckverstärkungen 16, 17 in Höhe der oben bereits erwähnten, in der an die A-Säule 9, 10 sich anschließenden vorderen Seitentür angeordneten Crashrohr-Struktur an der A-Säule 9, 10 festgelegt. Fig. 3 zeigt insoweit den Kraftfluss in der oberen Crashebene bzw. im oberen Lastpfad "F2" ausgehend von der Federbeinaufnahme 11 auf direktem Weg durch die Crashstrebe 20 und die Eckverstärkung 16 hindurch in die A-Säule 9 und weiter durch besagte Crashrohr-Struktur hindurch, welche äußerst schematisch mit einem Pfeil 27 gekennzeichnet ist, nach hinten in nachgeordnete, Anstoßkräfte absorbierende Karosseriestrukturen.

### Bezugszeichenliste

- 1: Vorderwagen
- 2: Bodengruppe
- 3: Fahrgastzellenbereich
- 4: Stirnwand
- 5: unterer Längsträger
- 6: unterer Längsträger
- 7: oberer Längsträger
- 8: oberer Längsträger
- 9: A-Säule
- 10: A-Säule
- 11: Federbeinaufnahme
- 12: Federbeinaufnahme
- 13: Querträger
- 14: Modulquerträger
- 15: Mitteltunnelstruktur
- 16: Eckverstärkung
- 16a: erstes Eckverstärkungsteil
- 16b: zweites Eckverstärkungsteil
- 16c: drittes Eckverstärkungsteil
- 17: Eckverstärkung
- 18: Punkschweißung
- 19: mechanisches Befestigungselement
- 20: Crashstrebe
- 21: Stirnseite
- 22: Schweißflansch
- 23: Seitenfläche
- 24: Schweißflansch
- 25: Anschlussfläche
- 26: Schweißflansche
- 27: Pfeil (Crashrohr-Struktur)

## Patentansprüche

1. Vorderwagen (1) eines Fahrzeugs, insbesondere Kraftfahrzeugs, mit zwei in Fahrzeugquerrichtung (Y-Richtung) gesehen gegenüberliegend angeordneten unteren Längsträgern (6, 7), auf denen sich je eine Federbeinaufnahme (11, 12) abstützt, und mit einem Modulquerträger (14), der sich seinerseits in Fahrzeugquerrichtung (Y-Richtung) zwischen zwei A-Säulen (9, 10) erstreckt und mit denselben fest verbunden ist, **dadurch gekennzeichnet, dass** jeder A-Säule (9, 10) eine Eckverstärkung (16, 17) zugeordnet ist, die im Bereich der Anbindung des Modulquerträgers (14) an die A-Säule (16, 17) zum einen mit der A-Säule (16, 17) und zum anderen mit dem Modulquerträger (14) fest verbunden sowie mittels zumindest einer integrierten Crashstrebe (20) an einer Federbeinaufnahme (11, 12) abgestützt ist.

2. Vorderwagen (1) nach Anspruch 1, **dadurch gekennzeichnet, dass** die Eckverstärkung (16, 17) als ein zumindest abschnittsweise im Querschnitt geschlossenes Hohlprofil nach Art einer Crashbox ausgebildet ist, welche sich in Fahrzeugquerrichtung (Y-Richtung) gesehen entlang des Modulquerträgers (14) erstreckt und mit einer Stirnseite (21) zumindest an der A=Säule (9, 10) und mit einer Seitenfläche (23) zumindest am Modulquerträger (14) festgelegt ist.

3. Vorderwagen (1) nach Anspruch 2, **dadurch gekennzeichnet, dass** die Eckverstärkung (16, 17) stoffschlüssig und/oder mittels mechanischer Befestigungselemente an der A-Säule (9, 10) und dem Modulquerträger (14) festgelegt ist.

4. Vorderwagen (1) nach Anspruch 3, **dadurch gekennzeichnet, dass** die Eckverstärkung (16, 17) stoffschlüssig, vorzugsweise durch Schweißung (18), mit der A-Säule (9, 10) und vermittels mechanischer Befestigungselemente (19) mit dem Modulquerträger (14) fest verbunden ist.

5. Vorderwagen (1) nach einem der Ansprüche 1 bis 4, **dadurch gekennzeichnet, dass** die Eckverstärkung (16, 17) ein- oder mehrteilig aus Metallblech und/oder aus Metallguss gebildet ist.

6. Vorderwagen (1) nach Anspruch 4, **dadurch gekennzeichnet, dass** eine mehrteilig ausgebildete Eckverstärkung (16) zumindest durch ein erstes Eckverstärkungsteil (16a), über welches im Wesentlichen die feste Verbindung der Eckverstärkung (16) an der der A-Säule (9) und am Modulquerträger (14) bewirkt ist, durch ein zweites besagte Crashstrebe (20) darstellendes Eckverstärkungsteil (16b) und durch ein drittes Eckverstärkungsteil (16c), welches seinerseits im Wesentlichen erstes und zweites Eckverstärkungsteil (16a, 16b) zueinander aussteift, gebildet ist.

7. Vorderwagen (1) nach Anspruch 5 oder 6, **dadurch gekennzeichnet, dass** eine mehrteilig ausgebildete Eckverstärkung (16) vor Einbau derselben in die Rohbaukarosserie durch Fügen der einzelnen Eckverstärkungsteile (16a-c) zu einer Baugruppe komplettiert ist oder die einzelnen Eckverstärkungsteile (16a-c) während des Einbaus der Eckverstärkung (16) in die Rohbaukarosserie zu derselben komplettiert oder komplettierbar sind.

8. Vorderwagen (1) nach Anspruch 7, **dadurch gekennzeichnet, dass** die Eckverstärkungsteile (16a-c) derart ausgebildet sind, dass während des Einbaus in die Rohbaukarosserie ein Toleranzausgleich durch Relativverschiebung der Eckverstärkungsteile (16a-c) zueinander in Fahrzeuglängs-, Fahrzeughoch- und/oder Fahrzeugquerrichtung (X-, Z-, Y-Richtung) gestattet ist.

9. Vorderwagen (1) nach einem der Ansprüche 1 bis 8, **dadurch gekennzeichnet, dass** die Eckverstärkung (16, 17) in Höhe einer in der an die A-Säule (9, 10) sich anschließenden vorderen Seitentür angeordneten Crashrohr-Struktur (27) an der A-Säule (9, 10) festgelegt ist.

10. Fahrzeug, insbesondere Kraftfahrzeug, mit einem Vorderwagen (1) nach einem der Ansprüche 1 bis 9.

## Claims

1. Front end (1) of a vehicle, in particular of a motor vehicle, having two lower longitudinal members (6, 7) which are arranged opposite each other, as seen in the transverse direction (Y direction) of the vehicle and on each of which a spring strut mounting (11, 12) is supported, and having a module cross member (14) which, for its part, extends in the transverse direction (Y direction) of the vehicle between two A-pillars (9, 10) and is fixedly connected thereto, **characterized in that** each A-pillar (9, 10) is assigned a corner reinforcement (16, 17) which, in the region of the connection of the module cross member (14) to the A-pillar (16, 17), is fixedly connected to the A-pillar (16, 17) on the one hand and to the module cross member (14) on the other hand and is supported on a spring strut mounting (11, 12) by means of at least one integrated crash strut (20).

2. Front end (1) according to Claim 1, **characterized in that** the corner reinforcement (16, 17) is designed as a hollow profile, which is closed in cross section at least in sections, in the manner of a crash box which extends along the module cross member (14), as seen in the transverse direction (Y direction) of the vehicle, and is secured with an end side (21) at least on the A-pillar (9, 10) and with a side surface (23) at least on the module cross member (14).

3. Front end (1) according to Claim 2, **characterized in that** the corner reinforcement (16, 17) is secured on the A-pillar (9, 10) and on the module cross member (14) in an integrally bonded manner and/or by means of mechanical fastening elements.

4. Front end (1) according to Claim 3, **characterized in that** the corner reinforcement (16, 17) is fixedly connected to the A-pillar (9, 10) in an integrally bonded manner, preferably by welding (18), and to the module cross member (14) by means of mechanical fastening elements (19).

5. Front end (1) according to one of Claims 1 to 4, **characterized in that** the corner reinforcement (16, 17) is formed as a single part or has multiple parts from sheet metal and/or cast metal.

6. Front end (1) according to Claim 4, **characterized in that** a corner reinforcement (16) of multi-part design is formed at least by a first corner reinforcement part (16a), via which the fixed connection of the corner reinforcement (16) to the the A-pillar (9) and to the module cross member (14) is substantially brought about, by a second corner reinforcement part (16b) constituting said crash strut (20), and by a third corner reinforcement part (16c) which, for its part, substantially stiffens first and second corner reinforcement part (16a, 16b) with respect to each other.

7. Front end (1) according to Claim 5 or 6, **characterized in that** a corner reinforcement (16) of multi-part design is completed, prior to installation of same into the body shell, by joining together the individual corner reinforcement parts (16a - c) to form an assembly, or the individual reinforcement parts (16a - c) are completed or can be completed to form same during the installation of the corner reinforcement (16) into the body shell.

8. Front end (1) according to Claim 7, **characterized in that** the corner reinforcement parts (16a - c) are designed in such a manner that, during the installation into the body shell, tolerances are compensated for by displacing the corner reinforcement parts (16a - c) relative to one another in the longitudinal, vertical and/or transverse direction (X, Z, Y direction) of the vehicle.

9. Front end (1) according to one of Claims 1 to 8, **characterized in that** the corner reinforcement (16, 17) is secured on the A-pillar (9, 10) level with a crash tube structure (27) which is arranged in the front side door adjoining the A-pillar (9, 10).

10. Vehicle, in particular motor vehicle, with a front end (1) according to one of Claims 1 to 9.

## Revendications

1. Partie avant (1) d'un véhicule, en particulier d'un véhicule automobile, comprenant deux longerons inférieurs (6, 7) disposés en face l'un de l'autre vus dans la direction transversale du véhicule (direction Y), sur lesquels s'appuie à chaque fois un logement de jambe de force (11, 12), et comprenant une traverse modulaire (14) qui s'étend pour sa part dans la direction transversale du véhicule (direction Y) entre deux colonnes A (9, 10) et qui est connectée fixement à celles-ci, **caractérisée en ce qu'**à chaque colonne A (9, 10) est associé un renforcement des coins (16, 17) qui, dans la région de raccordement de la traverse modulaire (14) à la colonne A (9, 10), est connecté fixement d'une part à la colonne A (9, 10) et d'autre part à la traverse modulaire (14), et qui est supporté au moyen d'au moins une barre d'impact intégrée (20) au niveau d'un logement de jambe de force (11, 12).

2. Partie avant (1) selon la revendication 1, **caractérisée en ce que** le renforcement des coins (16, 17) est réalisé sous la forme d'un profilé creux fermé au moins en partie en section transversale à la manière d'une crashbox qui, vue dans la direction transversale du véhicule (direction Y), s'étend le long de la traverse modulaire (14) et est fixée par un côté frontal (21) au moins à la colonne A (9, 10) et par une face latérale (23) au moins à la traverse modulaire (14).

3. Partie avant (1) selon la revendication 2, **caractérisée en ce que** le renforcement des coins (16, 17) est fixé par engagement par liaison de matière et/ou au moyen d'éléments de fixation mécaniques à la colonne A (9, 10) et à la traverse modulaire (14).

4. Partie avant (1) selon la revendication 3, **caractérisée en ce que** le renforcement des coins (16, 17) est connecté fixement par engagement par liaison de matière, de préférence par soudage (18), à la colonne A (9, 10) et par le biais d'éléments de fixation mécaniques (19) à la traverse modulaire (14).

5. Partie avant (1) selon l'une quelconque des revendications 1 à 4, **caractérisée en ce que** le renforcement des coins (16, 17) est formé en une ou plusieurs parties à partir de tôle métallique et/ou de fonte métallique.

6. Partie avant (1) selon la revendication 4, **caractérisée en ce qu'**un renforcement des coins (16) réalisé en plusieurs parties est formé au moins par une première partie de renforcement des coins (16a), par le biais de laquelle est réalisée essentiellement la connexion fixe du renforcement des coins (16) à la la colonne A (9) et à la traverse modulaire (14), par une deuxième partie de renforcement des coins (16b) constituant ladite barre d'impact (20) et par une troisième partie de renforcement des coins (16c), qui pour sa part, renforce essentiellement la première et la deuxième partie de renforcement des coins (16a, 16b) l'une par rapport à l'autre.

7. Partie avant (1) selon la revendication 5 ou 6, **caractérisée en ce qu'**un renforcement des coins (16) réalisé en plusieurs parties, avant son installation dans la carrosserie brute, est complété par assemblage des parties de renforcement des coins individuelles (16a-c) pour former un module, ou les parties de renforcement des coins individuelles (16a-c), pendant l'installation du renforcement des coins (16) dans la carrosserie brute, sont complétées ou peuvent être complétées sur cette dernière.

8. Partie avant (1) selon la revendication 7, **caractérisée en ce que** les parties de renforcement des coins (16a-c) sont réalisées de telle sorte que pendant l'installation dans la carrosserie brute, une compensation des tolérances soit obtenue par un déplacement relatif des parties de renforcement des coins (16a-c) les unes par rapport aux autres dans la direction longitudinale du véhicule, la direction verticale du véhicule et/ou la direction transversale du véhicule (directions X, Z, Y).

9. Partie avant (1) selon l'une quelconque des revendications 1 à 8, **caractérisée en ce que** le renforcement des coins (16, 17) est fixé à la colonne A (9, 10) à la hauteur d'une structure de tube d'impact (27) disposée dans la porte latérale avant se raccordant à la colonne A (9, 10).

10. Véhicule, en particulier véhicule automobile comprenant une partie avant (1) selon l'une quelconque des revendications 1 à 9.
